# EUROPÄISCHE PATENTSCHRIFT

(11) **EP 3 600 717 B1**
(45) Veröffentlichungstag und Bekanntmachung des Hinweises auf die Patenterteilung: **12.05.2021**
(21) Anmeldenummer: 18718676.2
(22) Anmeldetag: 28.03.2018
(51) Int. Cl.: B22C 1/00, B22C 1/02, B22C 1/16, B22C 1/18, B22C 1/22, B22C 3/00, B22C 9/02, B22C 9/10

(54) **FORMSTOFFMISCHUNG ENTHALTEND ADDITIVE ZUR REDUZIERUNG VON GUSSFEHLERN ODER ALS TRENNMITTEL**
MOULD MATERIAL MIXTURE CONTAINING ADDITIVES FOR REDUCING CASTING DEFECTS OR AS RELEASE AGENT
MÉLANGE DE MATIÈRES MOULABLES CONTENANT DES ADDITIFS SERVANT À RÉDUIRE LES DÉFAUTS DE FONDERIE OU COMME AGENT DE DÉMOULAGE

(30) Priorität: 28.03.2017 DE 102017106686
(43) Veröffentlichungstag der Anmeldung: 05.02.2020
(73) Patentinhaber: ASK Chemicals GmbH, 40721 Hilden (DE)
(72) Erfinder: ERNST, Ingrid, 42555 Velbert (DE); PRIEBE, Christian, 42489 Wülfrath (DE); RICHTERS, Michael, 45309 Essen (DE)
(74) Vertreter: Müller Schupfner & Partner Patent- und Rechtsanwaltspartnerschaft mbB
(86) Internationale Anmeldenummer: PCT/DE2018/100290
(87) Internationale Veröffentlichungsnummer: WO 2018/177480

(56) Entgegenhaltungen:
- DE-A1- 4 327 292
- DE-A1-102013 004 663
- JP-A- 2011 056 518
- US-A- 2 454 283
- US-A- 2 556 335
- US-A- 3 645 942
- US-A- 3 978 906
- US-A- 4 268 425

## Beschreibung

Die Erfindung betrifft Formstoffmischungen zur Herstellung von Formen oder Kernen für den Metallguss umfassend mindestens einen feuerfesten Formgrundstoff, ein Bindemittel und ein Additiv auf der Basis von Faktis. Weiterhin betrifft die Erfindung ein Komponenten-System aus feuerfestem Formgrundstoff, Bindemittel und Faktis, ein Verfahren zur Herstellung von Formen und Kernen unter Verwendung der Formstoffmischungen bzw. des Komponenten-Systems sowie nach diesem Verfahren hergestellte Formen und Kerne.

### Hintergrund der Erfindung

Gießformen setzen sich im Wesentlichen aus Formen oder Formen und Kernen zusammen, welche die Negativform des herzustellenden Gussstücks darstellen. Diese Formen und Kerne bestehen dabei in der Regel aus einem feuerfesten Formgrundstoff, beispielsweise Quarzsand, und einem geeigneten Bindemittel, das der Gießform nach der Entnahme aus dem Formwerkzeug eine ausreichende mechanische Festigkeit verleiht. Der feuerfeste Formgrundstoff liegt bevorzugt in rieselfähiger Form vor, so dass er nach dem Mischen mit dem Bindemittel in eine geeignete Hohlform eingefüllt, verdichtet und danach ausgehärtet werden kann.

Formen bilden beim Gießen die äußere Wandung für das Gussstück, Kerne werden zur Ausbildung von Hohlräumen innerhalb des Gussstücks eingesetzt. Dabei ist es nicht zwingend notwendig, dass Formen und Kerne aus demselben Material bestehen. So erfolgt z.B. beim Kokillenguss die äußere Formgebung der Gussstücke mit Hilfe metallischer Dauerformen. Auch ist eine Kombination von Formen und Kernen, die aus unterschiedlich zusammengesetzten Formstoffmischungen und nach unterschiedlichen Verfahren hergestellt wurden, möglich.

Wenn nachstehend vereinfachend nur von Kernen gesprochen wird, gelten die Aussagen in gleichem Maße auch für Formen, die auf einer gleichen Formstoffmischung basieren und nach demselben Verfahren hergestellt wurden und umgekehrt. Die Form(en)- und etwaige Kerne werden zu einem Kernpaket zusammengestellt und anschließend mit flüssigem Metall wie Eisen, Stahl, Aluminium, Bronze, andere nicht-Eisen-Metalle abgegossen.

Das flüssige Metall füllt dann die Hohlräume und bildet somit das gewünschte Gussstück. Die hohen Temperaturen des flüssigen Metalls, insbesondere z.B. beim Eisenguss (Gießtemperaturen zwischen ca. 1300°C und 1500°C) oder Stahlguss (Gießtemperaturen zwischen ca. 1500°C bis 1700°C) führen zur Zersetzung des organischen Binders und erhitzen den Kern.

Bei Temperaturerhöhung dehnt sich Quarzsand aufgrund einer Wärmeausdehnung aus, bis bei 573°C eine Modifikationsänderung von alpha- zu beta-Quarz erfolgt, der sogenannte Quarzsprung, der eine sprunghafte Volumenvergrößerung nach sich zieht. Eine weitere Modifikationsänderung des Quarzsandes findet bei 1470°C von beta-Quarz zu (alpha) Cristobalit statt, die ebenfalls mit einer Volumenvergrößerung einhergeht. Diese Modifikationsänderung ist allerdings nicht nur von der Phasenumwandlungstemperatur, sondern auch stark von anderen Parametern, wie z.B. Körnung oder dem Temperatur-Zeit-Gradienten abhängig.

Diese Volumenänderungen werden für mechanische Spannungen im Sandgefüge nahe der Grenzfläche Metallschmelze - Sand verantwortlich gemacht, was zu Rissen in den Formen / Kernen führen kann, die das Eindringen von Metallschmelze in die Formen / Kerne ermöglicht und somit Blattrippen an der Gussoberfläche entstehen.

Blattrippen sind unregelmäßige, filigranartige, dünne metallische Auswüchse, die insbesondere in Winkeln oder an Ecken und Kanten der Gussstücke schwierig zu entfernen sind. Sie entstehen bevorzugt bei der Verwendung chemisch verfestigter Formstoffe an den inneren Konturen (den Kernen) der Gussteile und bilden sich durch Risse an der Formteiloberfläche, in die das flüssige Metall eindringen kann. Diese Blattrippen sind nicht gewünscht und müssen aufwendig und zeitintensiv entfernt werden, was mit erhöhten Kosten verbunden ist. Bei kritischen Anwendungen mit schmalen Durchführungen können Blattrippen solche Durchführungen verschließen. An diesen Stellen sind Blattrippen schlecht zu detektieren und oftmals nicht zu entfernen.

Andere Sandtypen, sogenannte Sondersande wie z. B. Chromerzsand, Olivine, Schamottesand, Bauxitsand oder auch speziell produzierte Sande, können ebenfalls zur Herstellung von Formen und Kernen verwendet werden.

Diese zeigen keine Phasenumwandlung zwischen 20°C und 1700°C, weisen niedrigere Wärmeausdehnungen auf und neigen deutlich weniger zu Blattrippenfehlern. Diese sind jedoch auch deutlich teurer. Es ist bekannt, Sandadditive im Sandgemisch zu verwenden um Blattrippenfehler zu vermeiden, bzw. zu reduzieren. Hierzu sind aus dem Stand der Technik vier verschiedene Typen von Anti-Blattrippen-Additiven bekannt, die sich in ihrer Wirkweise voneinander unterscheiden:
Der erste Typ sind Anti-Blattrippen-Additive, die durch ihre eigene geringe Wärmeausdehnung die des Quarzsand-Additivgemisches reduzieren, verglichen mit dem reinen Sandgemisch. Diese Additive werden auch als Sandersatz bezeichnet und in Zugabemengen, bezogen auf die Formstoffmischung, von 10 bis 100 Gew.% zugegeben. Hierzu gehören z.B. Aluminiumsilikate wie Mullitbeads oder sogenannte Microspheres.

Der zweite Anti-Blattrippen-Additivtyp beinhaltet sogenannte "Flussmittel". Diese Flussmittel reagieren entweder mit der Sandoberfläche und bilden neue Mineralien, wie z.B. Fayalit nach Zugabe von Eisenoxid, das durch eine deutlich geringere Ausdehnung Spannungen im Sandgefüge reduziert, oder bilden selbst oder in Verbindung mit anderen Materialien zähflüssige Phasen. Diese zähflüssigen Phasen geben dem Sandgefüge eine gewisse Elastizität, was zur Vermeidung von Blattrippen beiträgt, und sie können Poren an der Grenzfläche zum flüssigen Metall abdichten, so dass ein Eindringen des Metalls in das Sandgefüge erschwert wird und ebenfalls Oberflächenfehler des Gussstückes vermieden werden können. Zugabemengen dieser Additive liegen zwischen 1 bis 15 Gew.%, bevorzugt zwischen 2 bis 10 Gew.% und besonders bevorzugt 2 bis 8 Gew.%.

Der dritte Anti-Blattrippen-Additivtyp besteht aus organischen Materialien, die mit dem Quarzsand gemischt werden und als Platzhalter dienen. Diese Materialien verbrennen bis 500°C nahezu restlos während des Aufheizens des Sandes beim Abguss des flüssigen Metalls, hinterlassen eine Lücke und bieten dem Quarzsand mehr Platz für die Wärmeausdehnung. Hierdurch wird der mechanische Stress im Sandgefüge reduziert und somit auch die Tendenz zur Blattrippenbildung. Zu diesem Additivtyp gehören insbesondere Holzmehle, Dextrine und Stärken. Die Zugabemenge liegt hier zwischen 0,5 bis 8 Gew.%, bevorzugt zwischen 0,5 bis 6 Gew.% und besonders bevorzugt zwischen 0,5 bis 5 Gew.%.

Auch Kohlenstaub oder Graphit wird als Anti-Blattrippen-Additiv (vierter Anti-Blattrippen-Additivtyp) eingesetzt, lässt sich aber nicht eindeutig einer der drei bereits genannten Typen zuordnen. Zwar dient Kohle oder Graphit in gewisser Weise auch als Platzhalter, die Hauptwirkweise dieser Stoffe ist aber etwas anders gelagert. Bei der Verbrennung bzw. Pyrolyse von Kohle und Graphit wird im Porenraum eine reduzierende Atmosphäre erzeugt, die es ermöglicht, den überschüssigen Kohlenstoff in Form von Glanzkohle auf der Oberfläche der Sandkörner abzuscheiden. Diese dünne Kohlenstoffschicht erschwert die Benetzung der Sandkörner durch die Metallschmelze und verhindert ein Eindringen des flüssigen Metalls in das Sandgefüge. Die Zugabemenge liegt hier zwischen 0,01 bis 10 Gew.%, bevorzugt zwischen 0,02 bis 5 Gew.% und besonders bevorzugt zwischen 0,02 und 3 Gew.%.

Für wasserglasgebundene Formen ist es bekannt zur Verbesserung der Gussoberfläche organische Additive der Formstoffmischung zuzusetzen, allerdings nicht im Zusammenhang mit Blattrippenfehlern. Als geeignete organische Additive sind beispielsweise Phenol-Formaldehydharze wie z. B. Novolake, Epoxidharze wie beispielsweise Bisphenol-A-Epoxidharze, Bisphenol F-Epoxidharze oder epoxidierte Novolake, Polyole wie beispielsweise Polyethylen- oder Polypropylenglykole, Glycerin oder Polyglycerin, Polyolefine wie beispielsweise Polyethylen oder Polypropylen, Copolymere aus Olefinen wie Ethylen und/oder Propylen mit weiteren Comonomeren wie Vinylacetat oder Styrol und/oder Dienmonomeren wie Butadien, Polyamide wie beispielsweise Polyamid-6, Polyamid-12 oder Polyamid-6,6, natürliche Harze wie beispielsweise Balsamharz, Fettsäureester wie beispielsweise Cetylpalmitat, Fettsäureamide wie beispielsweise Ethylendiaminbisstearamid, Metallseifen wie beispielsweise Stearate oder Oleate zwei- oder dreiwertiger Metalle sowie Kohlenhydrate wie beispielsweise Dextrine. Geeignete Kohlenhydrate sind in der WO 2008/046651 A1 beschrieben. Die organischen Additive können sowohl als reiner Stoff, als auch im Gemisch mit verschiedenen anderen organischen und/oder anorganischen Verbindungen eingesetzt werden. Die organischen Additive werden bevorzugt in einer Menge von 0,01 Gew.% bis 1,5 Gew.%, besonders bevorzugt 0,05 Gew.% bis 1,3 Gew.% und ganz besonders bevorzugt 0,1 Gew.% bis 1 Gew.% zugegeben, jeweils bezogen auf den Formstoff.

Ebenso sind Styrol-Polymere enthaltende Schlichten zur Verbesserung der Oberflächenqualität vorgeschlagen worden, vergleiche WO 2008135247 A1. Industrietypische Antihaftmittel sind beispielsweise in der EP 2244870 B1 offenbart. Es handelt sich i.d.R. entweder um (koaleszierte) Filme von Siliconen, die entweder als Lösung oder als Emulsion auf die Innenkonturflächen des Werkzeuges aufgetragen werden, oder um einen gehärteten Trennlack. Es wird angenommen, dass die Antihaftwirkung derartiger Filme durch deren Benetzungsverhalten gegenüber den Komponenten in der Formstoffmischung bestimmt wird.

US 3 978 906 A offenbart Formgrundstoffe, die mit einem Bindemittel beschichtet sind, das unter anderem Faktis als Klebrigmacher enthalten kann.

US 2 556 335 A offenbart auf trocknenden Ölen basierende Bindemittel für Sandkerne, denen Peroxide beigesetzt sind, um die Härtung zu verbessern.

### Aufgabe der Erfindung

Trotz der Vielzahl an möglichen Additiven ist das Problem "Blattrippen" nicht für alle Anwendungsfälle gelöst. Um den gewünschten Effekt, die Vermeidung von Blattrippen, zu erzielen, müssen oft größere Mengen an Additiv zugesetzt werden. Darunter leiden häufig andere wichtige Eigenschaften, z.B. die Festigkeiten der Formen und Kerne oder die Verarbeitungszeit der Formstoffmischungen. Mitunter entstehen auch andere Gussfehler.

Der Einsatz von Additiven kann auch zu einer unerwünschten Verschmutzung im Werkzeug führen, z.B. durch rotes Eisenoxid. Eine solche Verschmutzung führt dann häufig zu erhöhter Klebeneigung und macht kürzere Reinigungszyklen des Kernkastens erforderlich.

Die Erfinder haben sich zur Aufgabe gestellt, neue Additive zur Verfügung zu stellen, die in allen gängigen Kernherstellungsverfahren einsetzbar und bereits in relativ geringen Mengen wirksam sind und (zusätzlich wie auch alleinig) die Klebeneigung im Kernkasten reduzieren.

### Zusammenfassung der Erfindung

Gegenstand der Erfindung ist eine Formstoffmischung umfassend feuerfesten Formgrundstoff, Bindemittel und Faktis, eine Verwendung von Faktis bzw. ein Verfahren gemäß den unabhängigen Patentansprüchen. Vorteilhafte Ausgestaltungen sind Gegenstand der Unteransprüche oder nachfolgend beschrieben.

Überraschend wurde gefunden, dass ein Anteil von Faktis in der Formstoffmischung die Blattrippenneigung, insbesondere im Eisen- und Stahlguß, erheblich reduziert. Weiterhin überraschend wurde gefunden, dass die Klebeneigung am Formwerkzeug durch den Einsatz von Faktis reduziert wird. Dies hat den Vorteil, dass weniger Sandanhaftungen in den Formwerkzeugen, z.B. einer Kernschießmaschine, zurückbleiben und sich somit die Häufigkeit der Reinigung verringert, was zu weniger Zeitverlust und deshalb zu Kosteneinsparungen führt.

Unter Faktis, auch unter der Bezeichnung Ölkautschuk bekannt, versteht man vernetzte ungesättigte Ester, insbesondere fette Öle wie ungesättigte Pflanzenöle, wie z.B. Raps-, Rizinus-, Lein-, Soja-, Hanf-, Jathropa-, Cashew-Nuss-Schalen-, Erdnuss-, Rübsamen- oder Fischöl. Kennzeichen der vernetzten fetten Öle ist jeweils, dass diese Triglyceride sind, die jeweils zumindest zwei, vorzugsweise drei Estergruppen aufweisen, wobei mindestens zwei, insbesondere drei, der Estergruppen vor der Vernetzungsreaktion zumindest jeweils eine Doppelbindung aufweisen. Geeignete ungesättigte Ester als Ausgangsmaterialien sind auch teilhydrierte Triglyceride oder ungesättigte synthetische Fettsäureester. Faktis ist somit bei Raumtemperatur (25°C) ein Feststoff, der durch Einwirkung eines oder mehrerer Vernetzungsmittel auf ungesättigte Ester oder Ester-Gruppen herstellbar ist, insbesondere ein kautschukähnlicher Stoff. Die umgesetzten Ester bilden nach der Vernetzung ein dreidimensional vernetztes Polymerisationsprodukt aus. Es sind auch Mischungen der unterschiedlichen Faktisse untereinander möglich. Faktis ist weder in dem eingesetzten Bindemittel noch in der Polyol-Komponente des eingesetzten Bindemittels löslich. Nach einer bevorzugten Ausführungsform umfasst jedes Faktis-Molekül im Mittel mehr als zwei vernetzte Triglyceride.

Faktis enthält keine Oxiran-Gruppen und ist damit nicht mit epoxidierten Fettsäurestern zu verwechseln, wie diese als Monomer-Bestandteil zur Herstellung von Harzen als Bindemittel oder als Teil des Bindemittels eingesetzt werden (vergleiche z.B. DE 102013004663 A1 oder DE 4327292 A1), etwa als Teil von Epoxidharzen oder Alkydharzen. Faktis kann als Feststoff im Bindemittel dispergiert werden, ist aber nicht selbst das flüssige Bindemittel.

Der feuerfeste Formgrundstoff umfasst insbesondere mehr als 20 Gew.% Quarzsand bezogen auf den eingesetzten feuerfesten Formgrundstoff, besonders bevorzugt mehr als 40 Gew.%, insbesondere bevorzugt mehr als 60 Gew.% Quarzsand.

Die erfindungsgemäßen Formstoffmischungen umfassen zumindest:
a) einen feuerfesten Formgrundstoff,
b) ein Bindemittel, und
c) Faktis

### Detaillierte Beschreibung der Erfindung

Bei den feuerfesten Formgrundstoffen handelt es sich um einen oder ein Gemisch aus mehreren geeigneten feuerfesten Formgrundstoffen, umfassend überwiegend Quarzsand, wobei der Quarzsand als Neusand oder regenerierter Altsand bzw. als eine beliebige Mischung aus beiden vorliegen kann. Die erfindungsgemäß eingesetzten Formgrundstoffe enthalten insbesondere mehr als 20 Gew.% Quarzsand bezogen auf den feuerfesten Formgrundstoff, besonders bevorzugt mehr als 40 Gew.%, insbesondere bevorzugt mehr als 60 Gew.% Quarzsand.

Als feuerfester Formgrundstoff können für die Herstellung von Gießformen übliche und bekannte Materialien sowie deren Mischungen verwendet werden. Geeignet sind beispielsweise Quarzsand, Zirkonsand oder Chromerzsand, Olivin, Vermiculit, Bauxit, Schamotte sowie sogenannte künstliche Formgrundstoffe, also Formgrundstoffe, die durch industrielle Verfahren der Formgebung in sphärische oder annähernd sphärische (zum Beispiel ellipsoide) Form gebracht wurden.

Beispiele hierfür sind Glasperlen, Glasgranulat oder künstliche, spherische, keramische Sande - sogenannte Cerabeads® - aber auch Spherichrome®, SphereOX® oder "Carboaccucast", sowie Mikrohohlkugeln wie sie unter anderem als Komponente aus Flugaschen isoliert werden können, wie z.B. Aluminiumsilikathohlkugeln (sog. Microspheres). Mischungen der genannten Formgrundstoffe sind ebenfalls möglich.

Unter einem feuerfesten Formgrundstoff werden Stoffe verstanden, die einen hohen Schmelzpunkt (Schmelztemperatur) aufweisen. Vorzugsweise ist der Schmelzpunkt des feuerfesten Formgrundstoffs bzw. der Bestandteile des feuerfesten Formgrundstoffs größer als 600°C, bevorzugt größer als 900°C, besonders bevorzugt größer als 1200°C und insbesondere bevorzugt größer als 1500°C. Der feuerfeste Formgrundstoff macht vorzugsweise größer 70 Gew.%, insbesondere größer 80 Gew.%, besonders bevorzugt größer 85 Gew.%, der Formstoffmischung aus.

Der mittlere Durchmesser der feuerfesten Formgrundstoffe liegt in der Regel zwischen 100 µm und 600 µm, bevorzugt zwischen 120 µm und 550 µm und besonders bevorzugt zwischen 150 µm und 500 µm. Die Partikelgröße lässt sich z.B. durch Siebung nach DIN ISO 3310 bestimmen. Besonders bevorzugt sind Teilchenformen mit größter Längenausdehnung zu kleinster Längenausdehnung (rechtwinkelig zueinander und jeweils für alle Raumrichtungen) von 1:1 bis 1:5 oder 1:1 bis 1:3, d.h. solche die z.B. nicht faserförmig sind.

Der feuerfeste Formgrundstoff weist vorzugsweise einen rieselfähigen Zustand auf, insbesondere um die erfindungsgemäße Formstoffmischung in üblichen Kernschießmaschinen verarbeiten zu können.

Als Bindemittel sind unterschiedliche anorganische und organische Bindersysteme einsetzbar. Als Beispiele können folgende Verfahren und deren zugehörige Binder genannt werden:

| | |
|---|---|
| PU-ColdBox-Verfahren | 2 K-Bindemittel bestehend aus einer Polyol-(Benzyletherharz) und einer Polyisocyanat-komponente, Härtung: gasförmiges tertiäres Amin |
| PU-NoBake-Verfahren | 2 K-Bindemittel bestehend aus einer Polyol-(Benzyletherharz) und einer Polyisocyanat-komponente, Härtung: flüssiges Amin |
| Resol-CO₂-Verfahren | hochalkalische Phenolresole enthaltend eine Borverbindung, Härtung: CO₂ |
| Resol-Ester-Verfahren | hochalkalische Resole Alphaset-Verfahren, Härtung: flüssige Ester; Betaset-Verfahren, Härtung: gasförmiges Methylformiat |
| HotBox-Verfahren | Resole, Furanharze, Harnstoffharze oder Mischharze, Härtung: latente Säure plus Hitzeeinwirkung |
| Warm Box-Verfahren | Furanharze, Härtung: latente Säure plus Hitzeeinwirkung |
| Anorg. HotBox-Verfahren | Binder auf Silikatbasis, Härtung: durch Hitzeeinwirkung oder CO₂ |
| Croning-Verfahren | Novolake, Härtung: Hexamethylentriamin und Härtung: latente Säure plus Hitzeeinwirkung |
| NoBake-Verfahren | Resole, Furanharze oder Mischharze, Säurehärtung |
| Epoxy SO₂-Verfahren | Mischung aus Epoxidharzen und Acrylaten, Härtung SO₂-Zugabe |
| ISOMAX® | Mischung aus ColdBox Epoxy - Acrylat Hybridbinder und Epoxy SO₂-Verfahren, Härtung: gasförmiges tertiäres Amin (beispielsweise gemäß US 5880175) |

Bevorzugt sind Bindemittel wie diese im PU-Cold Box oder Epoxy SO₂ Verfahren eingesetzt werden. Dies sind einerseits eine Polyolverbindung (insbesondere Benzyletherharze) und Polyisocyanate als Bindemittel und tertiäre Amine als Härter und andererseits Mischungen enthaltend zumindest Epoxidharze und Acrylate, die durch SO₂-Zugabe ausgehärtet werden, oder davon abgeleitete Amin gashärtende Hybridbindersysteme.

Die Binder werden dem Formgrundstoff zugemischt und die Formstoffmischungen enthalten ggf. weitere Blattrippen-Additive.

Als Bindemittel kann jedes der o.g. Bindemittel in einer Menge von ca. 0,4 Gew.% bis ca. 7 Gew.%, bevorzugt von ca. 0,5 Gew.% bis ca. 6 Gew.% und besonders bevorzugt von ca. 0,5 Gew.% bis ca. 5 Gew.%, jeweils bezogen auf die Formstoffmischung, zum Einsatz kommen.

Für die Herstellung der Formstoffmischung können zuerst die Komponenten des Bindemittelsystems vereinigt und dann zu dem feuerfesten Formgrundstoff zugegeben werden. Es ist jedoch auch möglich, die Komponenten des Bindemittels gleichzeitig oder nacheinander in beliebiger Reihenfolge zu dem feuerfesten Formgrundstoff zu geben. Um eine gleichmäßige Mischung der Komponenten der Formstoffmischung zu erzielen, können übliche Verfahren verwendet werden. Die erfindungsgemäßen Additive bzw. die erfindungsgemäße Formstoffmischung enthalten als Bestandteil einen oder mehrere Vertreter aus der Substanzgruppe, die unter der Bezeichnung "Faktis" bekannt ist.

Faktis ist ein farbloser, gelber oder brauner kautschukähnlicher Stoff, der durch Einwirkung eines Vernetzungsmittels z.B. Schwefelchlorid bzw. Schwefel (Schwefel-Faktisse) bzw. (Luft-)Sauerstoff in der Hitze (Sauerstoff-Faktisse), Epoxide bzw. Oxirane (Epoxid-Faktisse), Siliciumtetrachlorid (Silicium-Faktisse) oder Diisocyanaten (Isocyanat-Faktisse) auf ungesättigte Fettsäureester, wie fette Öle, hergestellt werden kann.

Bevorzugte Ester sind die natürlichen Triglyceride ungesättigter Fettsäuren, die sogenannten fetten Öle. Beispiele für geeignete fette Öle sind Rüböl, Rapsöl, Ricinusöle, Tallöl, Trane, Leinöl, Sojaöl, Jathropaöl, und Fischöl aber auch teilhydrierte Triglyceride und ungesättigte synthetische Fettsäureester bzw. deren Mischungen.

Faktisse sind Feststoffe und werden entweder als Pulver oder wässrige oder lösemittelhaltige Dispersionen angeboten und so als Additive in Farben und Lacken eingesetzt, um die haptischen Eigenschaften wie Soft-Feel oder Antirutsch zu verbessern. Darüber hinaus fungiert Faktis als Füllstoff in Elastomer-Bauteilen wie beispielsweise Profilen, Druckwalzen oder Radiergummis (vergleiche EP 2570451 B1). Vorliegend werden bevorzugt Pulver eingesetzt.

Nach einer Methode der Herstellung von Faktis werden fette Öle bei ca. 120°C bis 170°C mit 5 bis 20 Gew.% Schwefel oder bei 20 bis 70°C mit Dischwefeldichlorid umgesetzt. Dabei bilden sich Polyschwefelverbindungen aus, ein Teil des Schwefels liegt aber auch frei vor. Weiterhin gibt es Faktis-Typen, bei denen die Vernetzung der Doppelbindungen nicht durch Schwefel, sondern radikalisch durch Peroxide erfolgt. Die Pulver sind z.B. durch Mahlen zugänglich. Die Teilchen neigen zur Agglomeration.

Nach dem aus der EP 0121699 A1 bekannten Herstellungsverfahren werden Epoxid-Faktisse erhalten. Hierbei werden ungesättigten Ester zunächst epoxidiert und zur Vernetzung mit Vernetzungsmittel umgesetzt.

Die epoxidierten und anschließend vernetzten Ester werden erhalten, indem man die ungesättigten Ester (z.B. die fetten Öle) zunächst epoxidiert und anschließend mittels geeigneter, mit Epoxid-Gruppen reagierenden mehrfunktionellen Vernetzungsmitteln, wie Polycarbonsäuren, Polyaminen, Polyhydroxyverbindungen oder Polythiolverbindungen vernetzt. Geeignete Di- oder Polycarbonsäuren sind z.B. Bernsteinsäure, Phthalsäure, Tere- und Isophthalsäure und Trimellithsäure. Geeignete Polyamine sind z.B. Ethylendiamin, Diethylentriamin, Hexamethylendiamin und Phenylendiamine. Geeignete Polyhydroxyverbindungen sind z.B. Glycerin, Glykol, Diglykol, Pentaerythrit, Hydrochinon, Pyrogallol, und mit Polyalkoholen veresterte Hydroxycarbonsäuren. Geeignete Polythiolverbindungen sind z.B. Ethanthiol-1,2, Trimethylolpropan-tri-3-mercaptopropionat, Pentaerythrit- tetra-3-mercaptopropionat und Dithiophosphorsäuren. Geeignete Vernetzungsmittel können auch verschiedene funktionelle Gruppen in einem Molekül enthalten. Geeignete, mindestens zweiwertige, vorzugsweise dreiwertige Alkohole sind z.B. Glycerin, Glykol, Pentaerythrit, Trimethylolpropan und/oder Sorbit. Bevorzugte Ester sind die natürlichen Triglyceride ungesättigter Fettsäuren, die oben genannten sogenannten fetten Öl. Details der Herstellung sind aus der der EP 0121699 A1 ersichtlich.

Die eingesetzten Faktisse sind nicht schmelzbar und nicht löslich, bei längerer Erhitzung tritt thermischer Abbau ein. Die Molmasse kann zwischen ca. 30000 g/mol und 150000 g/mol betragen, bevorzugt zwischen 30000 und 80000 g/mol, insbesondere bevorzugt 30000 bis 50000 g/mol (mittlere Molmasse, jeweils Zahlenmittel).

Der Gesamtgehalt an Schwefel (einschließlich der S-Brücken) liegt im erfindungsgemäß eingesetzten Faktis zwischen 0 und ca. 20 Gew.%, bevorzugt zwischen 0 und ca. 10 Gew.%, besonders bevorzugt zwischen 0 und ca. 5 Gew.% und ganz besonders bevorzugt zwischen 0 und 0,2 Gew.%, bezogen auf Faktis.

Nach einer anderen Definition beträgt der Gesamtgehalt an Schwefel (einschließlich der S-Brücken) zwischen 0 und ca. 5 Gew.%, bevorzugt zwischen 0 und ca. 3 Gew.%, besonders bevorzugt zwischen 0 und ca. 2 Gew.% und ganz besonders bevorzugt zwischen 0 und 0,5 Gew.%, jeweils bezogen auf die Formstoffmischung.

Bezüglich der Teilchengröße sind Faktisse mit einem mittleren Durchmesser von ca. 30 bis ca. 600 µm für den Einsatz als Sandadditiv besonders geeignet, vorzugsweise von ca. 60 bis ca. 300 µm und besonders bevorzugt von ca. 80 bis ca. 200 µm (gemessen mit Horiba LA-950, Retsch Technology, auf Grundlage der statischen Laserlichtstreuung gemäß DIN ISO 13320, gemessen in Isopropanol, Durchflusszelle 290 ml, Transmission R 80% bis 88%, Transmission B 85% bis 90% unter Zirkulation und Rühren, Ultraschall vor Messung 1 Minute auf Stufe 3 von 7, Sonde: 130 W, 28 kHz).

Das erfindungsgemäße Anti-Blattrippen-Additiv enthält Faktis oder Faktis-Mischungen untereinander. Faktis kann auch als alleiniges Anti-Blattrippen-Additiv verwendet werden, unabhängig davon, ob es als Pulver oder Dispersion vorliegt. Die Verwendung von Faktis als Pulver ist bevorzugt.

Die Zugabemenge von Faktis allein liegt erfindungsgemäß zwischen 0,01 und 8 Gew.%, vorzugsweise zwischen ca. 0,05 und 5 Gew.% oder zwischen ca. 0,04 und 5 Gew.%, insbesondere vorzugsweise zwischen 0,1 und 3 Gew.% und ganz besonders bevorzugt größer 0,2 und kleiner 1,5 Gew.% . Die angegebenen Mengen beziehen sich auf Faktis bezogen auf die Formstoffmischung.

Die Zugabemenge von Faktis bezogen auf den Formgrundstoff liegt erfindungsgemäß zwischen ca. 0,01 und 8 Gew.%, vorzugsweise zwischen ca. 0,05 und 5 Gew.%, insbesondere vorzugsweise zwischen 0,1 und 3 Gew.% und ganz besonders bevorzugt größer 0,2 und kleiner 1,5 Gew.%.

In einer weiteren Ausführungsform kann dem Faktis zumindest ein weiteres Anti-Blattrippen-Additiv (in den Ansprüchen nur Additiv genannt) aus einer der vier am Anfang genannten bekannten Anti-Blattrippen-Additivtypen in einer Menge von 1 bis 98 Gew.%, besonders von 1 bis 95 Gew.% zugegeben werden, bezogen auf die eingesetzte Gesamtmenge Anti-Blattrippen-Additiv.

Das Verhältnis zwischen Faktis und weiteren Blattrippen-Additiv(en) beträgt 1:100 bis 100:1, bevorzugt 1:90 bis 90:1 und besonders bevorzugt von 1:10 bis 1:1. Bevorzugt werden anorganische Anti-Blattrippen-Additiv(en) zugemischt, besonders bevorzugt Alumosilikate und Oxide, insbesondere bevorzugt Spodumen, Alkali-, Erdalkalifeldspate, Eisen-, Aluminium-, Titan- und Manganoxide.

Mögliche weitere Anti-Blattrippen-Additive zur Vermeidung der Blattrippenbeildung umfassen beispielsweise Mineralien, Mikrohohlkugeln, Holzmehl, organisches Fasermaterial, Kohlenhydrate, Kohlenstoff, natürliche Öle, Mineralöle, Wachse, Naturharze und Kunstharze etc.. Geeignete Mineralien sind z.B. SphereOX®, TiO₂, Eisenoxid, Glimmer, alpha-Spodumen, beta-Spodumen und Vermiculit. Beispiele für Mikrohohlkugeln sind die unter den Bezeichnungen Extendospheres bzw. Q-Cel® vertriebenen Aluminiumsilikat- bzw. Borsilikatglasmikrohohlkugeln. Ein geeignetes Holzmehl ist z.B. Buchenholzmehl. Polyethylenfasern können beispielsweise als organisches Fasermaterial und Stärke als Kohlenhydrat eingesetzt werden. Wird Kohlenstoff als Additivkomponente verwendet, so kann dies in Form von Koks und/oder Graphit, sowohl gebläht als auch ungebläht, und/oder Steinkohlenstaub erfolgen. Rizinusöl und Leinöl sind als natürliche Öle und Petroleum als Mineralöl geeignet. Als Wachse kommen z.B. Polyethylenwachs und Vaseline in Frage. Balsamharz stellt ein Beispiel für eine geeignete Naturharzkomponente dar, während Phenolharze in Lösung oder in Pulverform oder Polyole (Glycerin) als Kunstharze zum Einsatz kommen können.

Besonders geeignete weitere zusätzliche Anti-Blattrippen-Additive sind
- zumindest ein Aluminiumsilikate, insbesondere in Mengen von 1 bis 15 Gew.%; besonders bevorzugt von 1 bis 10 Gew.%;
- ein Eisenoxid, insbesondere in Mengen von 1 bis 15 Gew.%, besonders bevorzugt von 1 bis 8 Gew.%;
- Holzmehle, insbesondere in Mengen von 0,3 bis 5 Gew.%, besonders bevorzugt von 0,3 bis 3 Gew.%; und/oder
- Dextrine und Stärken, insbesondere zwischen 0,5 bis 5 Gew.%, bevorzugt zwischen 0,5 bis 4 Gew.%, besonders bevorzugt von 0,5 bis 3 Gew.%, jeweils bezogen auf die Formstoffmischung.

Erfindungsgemäß kann Faktis, wie oben beschrieben, allein oder in Kombination mit konventionellen Additiven eingesetzt werden.

Im Falle des Einsatzes von zwei und mehr Anti-Blattrippen-Additiven kann Faktis der Formstoffmischung getrennt, gleichzeitig mit den übrigen Komponenten oder vorgemischt mit diesen zugegeben werden.

Bevorzugt werden das Additiv oder die Additivkomponenten mit den feuerfesten Formgrundstoffen vorgemischt und anschließend mit dem Bindemittel vermischt, die Zugabereihenfolge kann aber auch geändert und das Additiv beispielsweise zum Schluss zugegeben werden. Nach guter Durchmischung der erfindungsgemäßen Formstoffmischungen, werden diese in ein Formwerkzeug überführt, dort dem jeweils angewandten Verfahren entsprechend ausgehärtet und die so erhaltenen Formen und Kerne dem Werkzeug entnommen.

In einer Kernschießmaschine wird über Druckluft die Formstoffmischung verdichtet, um die gewünschten Dimensionen der Form bzw. des Kerns vorzugeben.

### Experimenteller Teil

Wenn nicht anders angegeben beziehen sich die nachfolgenden %-Angaben oder die Angabe von GWT (Gewichtsteilen) auf die eingesetzte Menge feuerfesten Formgrundstoff und das Gewicht bezogen (=100 GWT).

Die im Anhang befindlichen Zeichnungen verdeutlichen die Geometrie der Prüfkörperformen.

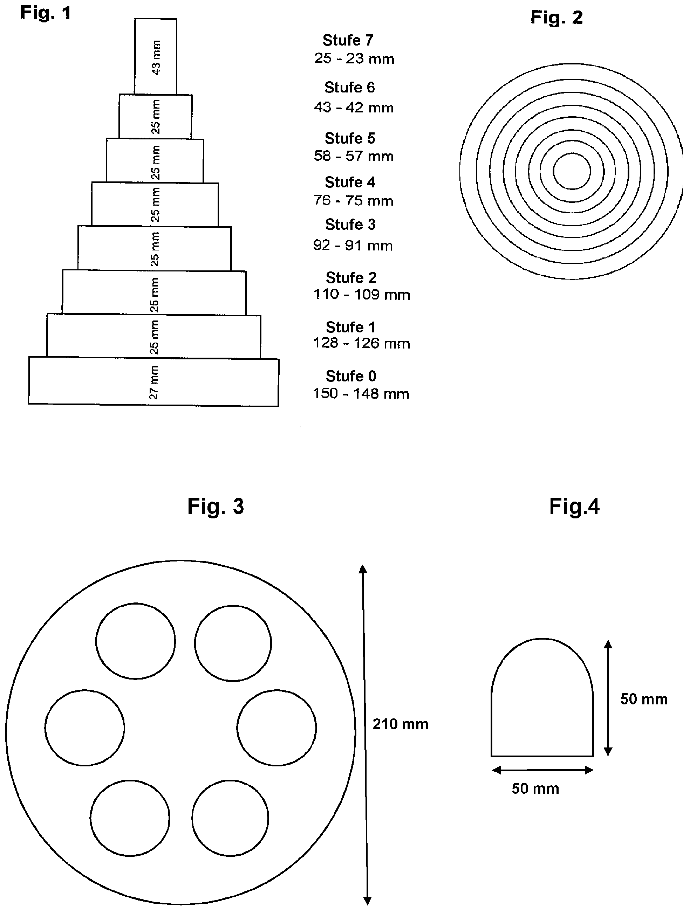

Fig. 1 zeigt eine Seitenansicht des hergestellten Stufenkerns unter Angabe der Stufenhöhen in mm innerhalb der Figur und der Außendurchmesser der Stufen rechts davon (erster Wert = Durchmesser der Stufe unten, zweiter Wert = Durchmesser der Stufe oben).

In Fig. 2 ist der Stufenkern von oben gezeigt.

Fig. 3 zeigt eine Draufsicht auf einen Boden mit mehreren Domkernen.

Fig. 4 zeigt einen Schnitt durch einen der Domkerne mit runder Kopffläche.

### Blattrippentest am Beispiel des Gusses eines Stufenkerns

Mit Hilfe von sogenannten Stufenkernen wurde der Einfluss von Faktis auf die Blattrippenneigung untersucht. Hierfür wurden Stufenkerne im Cold-Box Verfahren mit Hilfe einer Kernschießmaschine hergestellt.

Die Formstoffmischung umfassend
100 GWT Quarzsand H 32 Grube Haltern
0,8 GWT ECOCURE® R 300 WM 10
0,8 GWT ECOCURE® R 600 WM 11,
plus Additiv gemäß Tabelle 1
wurde mittels Mischer der Fa. Hobart homogen (Mischzeit je Komponente 1 Minute, 5 kg Gesamtgewicht der Mischung) hergestellt und mittels Druckluft (4 bar) in das Formwerkzeug eingebracht und zur Aushärtung mit KATALYSATOR 706 (ASK Chemicals GmbH, Dimethylpropylamin) 2,0 ml für 20 sec bei 2 bar Spüldruck begast. Anschließend wurden Stufenkerne in die Gießform derart eingeklebt, dass sie kopfüber (mit der schmalen Seite nach unten) in der Form hängen und beim Abguss langsam von unten nach oben mit flüssigem Metall gefüllt werden.

Der Abguss erfolgte mit einer Graugussschmelze GGJL bei einer Gießtemperatur von ca. 1410 °C, einer Giesshöhe von 55 cm und einer Gießzeit von ca. 12 sec. Das Gußgewicht beträgt etwa 12 kg, das Sand : Eisen Verhältnis beträgt bei der Stufe 1 (Durchmesser 128-126 mm) rd. 1 : 3 und bei Stufe 7 (Durchmesser 25 bis 23 mm) rd. 1 : 30. Nach dem Abkühlen der Gießform wurden die Gussstücke der Form entnommen und von anhaftendem Sand mittels Sandstrahlung befreit. Anschließend wurden die Gussstücke hinsichtlich Blattrippenbildung beurteilt, vergleiche Tabelle 1.

### Eingesetzt wurden:

| | |
|---|---|
| ECOCURE® 300 WM 10: | Benzyletherharz in Estern |
| ECOCURE® 600 WM 11: | Polymeres MDI in aromatischen Lösemitteln |
| ASKOCURE® 388: | Benzyletherharz in Aromaten und Estern |
| ASKOCURE® 688: | Polymeres MDI in aromatischem Lösemitteln |
| LIGNOCEL® HB 120: | Laubholzmehl, Partikelgröße 40 - 120 µm |
| DEOGRIP® WPF: | Peroxidisch vernetztes modifiziertes Rizinusöl, Hersteller: D.O.G Deutsche Oelfabrik Ges.f.chem.Erz. mbH & Co.KG, Hamburg |
| Faktis RQ 20: | Schwefelfaktis auf Basis Rizinusöl. Gesamtschwefelgehalt: 17,5 - 20,5%, Hersteller: D.O.G Deutsche Oelfabrik Ges.f.chem.Erz. mbH & Co.KG, Hamburg |
| Faktis NQ: | Schwefelfaktis auf Basis Rizinusöl, Gesamtschwefelgehalt: 11 - 14%, Hersteller: D.O.G Deutsche Oelfabrik Ges.f.chem.Erz. mbH & Co.KG, Hamburg |
| RHENOPREN® EPS: | Peroxidisch vernetztes pflanzliches Öl, Hersteller: Rhein Chemie Additives, Köln |
| RHENOPREN® C: | Gehärtetes Rapsöl mit Schwefel vernetzt, Schwefelgehalt: 16 - 18%, Hersteller: Rhein Chemie Additives, Köln |
| SphereOX®: | Hochreines synthetisches Eisenoxid, Fe₂O₃ + FeO Gehalt rd. 98%, Hersteller: Chesapeake Specialty Products, Inc., Baltimore / U.S.A. |
| Graphit: | Silberpudergrafit Type GHL 285, Dominik Georg Luh Technografit GmbH |

Bei Verwendung von ® handelt es sich jeweils um zumindest für Deutschland und/oder die USA für die entsprechenden Inhaber eingetragene Marken. Im nachfolgenden Text wurde das ® jeweils verkürzend nicht mehr dargestellt und es wird insofern auf obige Tabelle Bezug genommen.

Die Ergebnisse gemäß Tabelle 1 zeigen, dass die getesteten Faktis Typen RQ 20 und NQ, DEOGRIP WPF und RHENOPREN EPS, auch bei geringerer Zugabemenge eine bessere Wirkung gegen Blattrippen erzielen, als das Standardadditiv bestehend aus Holzmehl. Es wird vermutet, dass Faktis nicht nur nach dem Platzhalterprinzip wirkt, sondern wie Kohle oder Graphit bei der Verbrennung Glanzkohlenstoff aus der reduzierenden Atmosphäre heraus auf den Sandkörnern abscheidet und somit die Benetzung durch eine Metallschmelze erschwert.

### Blattrippentest am Beispiel des Abgusses eines Domkerns

Für die Beurteilung der Blattrippenneigung wurden zusätzlich Abgüsse von Domkernen unter Verwendung von verschiedenen Faktis Typen hergestellt. Dazu wurde aus einer Formstoffmischung (Herstellung der Formstoffmischung, wie zuvor beschrieben) aus:
100 GWT Quarzsand H 32 Grube Haltern
0,8 GWT ECOCURE 300 WM 10
0,8 GWT ECOCURE 600 WM 11,
plus Additiv gemäß Tabelle 2
gemischt und Domkerne (h=50mm, d=50mm) hergestellt.

Dazu wurde die Formstoffmischung in ein geeignetes Formwerkzeug mittels Druckluft von 4 bar eingebracht und für 20 sec mit 2,0 ml KATALYSATOR 706 (ASK Chemicals GmbH, DMPA) mit 2 bar Spüldruck ausgehärtet. Die Form wurde zusammengebaut, indem zunächst die Domkerne auf dem Boden des Hohlraums des Hauptkerns festgeklebt wurden und der Hohlraum mit dem Deckelkern verschlossen wurde. Im Deckelkern war eine kreisförmige Öffnung mit einem Durchmesser von 20 mm vorgesehen. Auf dem Deckelkern wurde dann der trichterförmige Eingusskern in der Weise befestigt, dass der Trichter zur Eingussöffnung des Deckelkerns führte. Der Gussvorgang erfolgt mittels Schwerkraftguss. Die Gießtemperatur beträgt etwa 1410 bis 1430 °C. Die Giesszeit betrug ca. 10 Sekunden, das Gussgewicht ca. 15 kg.

Auch hier wurden die Ergebnisse hinsichtlich der Blattrippenbildung bewertet und sind in Tabelle 2 zusammengestellt.

Auch mit diesem Versuch, wieder im Vergleich zum Standardadditiv Holzmehl, zeigte sich, dass unter Verwendung von Faktis eine sauberere Gußoberfläche erzielt wurde, als mit einem Standardadditiv und zwar unabhängig davon, ob ein schwefelhaltiges oder ein schwefelfreies Faktis verwendet wurde.

Die Biegefestigkeiten dieser Mischungen wurden ebenfalls gemessen und für hinreichend gut befunden.

### Ermittlung der Klebeneigung

Ein weiteres wichtiges Kriterium für die Verwendung eines Sandadditivs ist die sogenannte Klebeneigung an den Innenwänden des Kernwerkzeugs. Darunter versteht man die Neigung eines Additivs Sandanhaftungen beim Schießen von Kernen an den Werkzeugwandungen zu begünstigen. Hohe Sandanhaftungen im Werkzeug führen zu einem erhöhten Reinigungsaufwand und somit zu erhöhten Kosten.

Zur Feststellung der Klebeneigung wurde wie folgt vorgegangen. In einem Mischer der Fa. Hobart (Herstellung der Formstoffmischung, wie zuvor beschrieben) wurde eine Sandmischung aus Quarzsand H 32, Additiv (wie in den Tabellen 3 und 4 angegeben), 0,80% ECOCURE 300 WM 10 und 0,80% ECOCURE 600 WM 11 homogen vermischt.

Diese Sandmischung wurde in die Kernschießmaschine überführt und ein Kern mit einer Dimension (I x b x h) von 11cm x 5cm x 1,2cm mit einem Schießdruck von 4 bar mittels Druckluft in einer Schiessform hergestellt. Die Schiessform bestand aus Stahl und wurde vor dem ersten Benutzen mit Aceton entfettet und nicht mit einem externen Formtrennmittel behandelt. Mittels KATALYSATOR 706 (Dimethylpropylamin) (1ml, Begasungszeit 10 sec bei 2 bar Spüldruck) wurde der in die Form geschossene Kern ausgehärtet. Nach dem Aushärten wurde der Kern aus der Form entnommen. Dieser Vorgang wurde insgesamt 20-mal mit ein und derselben Sandmischung wiederholt, ohne dass die metallische Form zwischendurch gereinigt oder mit einem externen Trennmittel behandelt wurde. Nach den 20 Schiessvorgängen wurde die Schießform entnommen und die sich gebildeten Sandanhaftungen (direkt unter den zwei Einschußdüsen) mechanisch entfernt und ausgewogen. Die Menge der Sandanhaftungen in Milligramm Sandanhaftung (Tab. 3 und 4) ist ein Maß für die Klebeneigung der getesteten Sandmischung.

Getestet wurde eine Sandmischung mit 1,8 % SphereOx und 0,2 % Faktis gegen eine Sandmischung mit 2 % SphereOX, jeweils bezogen auf den Formgrundstoff. Die Bindermengen (Cold Box System) wurden so gewählt, dass die Festigkeiten der mit den Mischungen hergestellten Prüfkörper annähernd gleich waren. Nach 20 Kernschüssen war die am Werkzeug anhaftende Sandmenge mit der Faktis enthaltenden Formstoffmischung um größer 40% niedriger als die faktisfreie Mischung.

Aus der Praxis ist bekannt, dass Graphit eine sehr niedrige Klebeneigung besitzt und auch deshalb gerne als Additivkomponente in Mengen von 5 bis 20 % bezogen auf die Additivmischung beigemischt wird. Aus diesem Grund wurde ein direkter Vergleich zwischen 5 %, 10 % und 15 % Beimischung von Faktis bzw. Graphit zu SphereOX® im Klebeneigungstest vorgenommen. Diese Additivmischungen wurden mit Zugabemengen von je 2 % bezogen auf die Formstoffmischung dem Sand zugemischt.

In Tabelle 3 und 4 sind die Ergebnisse des Klebeneigungstests aufgeführt (Durchschnittswerte nach 20 Schüssen). Aus Tabelle 3 und 4 ist zu erkennen, dass die Klebeneigung, beurteilt über die Sandanhaftung, mit Faktis enthaltenden Mischungen deutlich geringer ist, im Vergleich zu den graphithaltigen Mischungen.

Bei den niedrigeren Beimischungen waren die Sandanhaftungen mit der Faktis enthaltenden ausgehärteten Formstoffmischungen aber um mehr als 70 % gegenüber der Graphitmischung reduziert.

Die Formstoffmischungen der Tabelle 3 und 4 enthielten jeweils folgende Additive bzw. Cold-Box Binder jeweils relativ zu 100 GWT feuerfesten Formgrundstoff. Dies ist Quarzsand H 32 der Grube Haltern.

| | |
|---|---|
| A3: | 0,8 GWT ASKOCURE 388, 0,8 GWT ASKOCURE 688, |
| A4: | 0,8 GWT ASKOCURE 388, 0,8 GWT ASKOCURE 688, 2 GWT SphereOX, |
| A5: | 0,7 GWT ASKOCURE 388, 0,7 GWT ASKOCURE 688, 2 GWT SphereOX, |
| A6: | 0,65 GWT ASKOCURE 388, 0,65 GWT ASKOCURE 688, 2 GWT SphereOX, |
| A7: | 0,8 GWT ASKOCURE 388, 0,8 GWT ASKOCURE 688, 1,9 GWT SphereOX + 0,1 GWT Graphit, |
| A8: | 0,8 GWT ASKOCURE 388, 0,8 GWT ASKOCURE 688, 1,8 GWT SphereOX + 0,2 GWT Graphit, |
| A9: | 0,8 GWT ASKOCURE 388, 0,8 GWT ASKOCURE 688, 1,7 GWT SphereOX + 0,3 GWT Graphit, |
| B8: | 0,8 GWT ASKOCURE 388, 0,8 GWT ASKOCURE 688, 1,8 GWT SphereOX + 0,2 GWT DEOGRIP WPF, |
| B9: | 0,8 GWT ASKOCURE 388, 0,8 GWT ASKOCURE 688, 1,9 GWT SphereOX + 0,1 GWT DEOGRIP WPF, |
| B10: | 0,8 GWT ASKOCURE 388, 0,8 GWT ASKOCURE 688, 1,8 GWT SphereOX + 0,2 GWT DEOGRIP WPF |
| B11: | 0,8 GWT ASKOCURE 388, 0,8 GWT ASKOCURE 688, 1,7 GWT SphereOX + 0,3 GWT DEOGRIP WPF |

**Tabelle 1**

| | | | Anzahl Blattripoen | | | | | | |
|---|---|---|---|---|---|---|---|---|---|
| | Mischung | Additiv | Stufe 1 | Stufe 2 | Stufe 3 | Stufe 4 | Stufe 5 | Stufe 6 | Stufe 7 |
| nicht erfindungsgemäß | A1 | ohne | 9 | 7 | 7 | 8 | 8 | vererzt | vererzt |
| | A2 | 0,8% LIGNOCEL HB 120 | 5 | 6 | 6 | 7 | vererzt | vererzt | vererzt |
| erfindungsgemäß | B1 | 0,4% DEOGRIP WPF | 5 | 4 | 4 | 4 | 4 | vererzt | vererzt |
| | B2 | 0,8% DEOGRIP WPF | 4 | 4 | 4 | 4 | 4 | 4 | vererzt |
| | B3 | 0,4% RHENOPREN EPS | 3 | 3 | 4 | 4 | 4 | 1 | vererzt |
| | B4 | 0,8% RHENOPREN EPS | 2 | 2 | 4 | 4 | 4 | 2 | vererzt |

| | | | | | | | | | |
|---|---|---|---|---|---|---|---|---|---|
| Stufe 0: 150 - 148 mm, wird in die Form eingeklebt, Stufe 1: 128 - 126 mm, Stufe 7: 25 - 23 mm, vergleiche Fig. 1 | | | | | | | | | |

**Tabelle 2**

| | Mischung | Additiv | Anzahl Blattrippen | Höhe Blattrippen [mm] | Vererzungen |
|---|---|---|---|---|---|
| nicht erfindungsgemäß | A1 | ohne | 3 | 5 | stark |
| | A2 | 0,8% LIGNOCEL HB 120 | 3 | 3 | stark |
| erfindungsgemäß | B1 | 0,4% DEOGRIP WPF | 4 | 1,5 | leicht |
| | B2 | 0,8% DEOGRIP WPF | 3 | 1 | leicht |
| | B3 | 0,4% RHENOPREN EPS | 2 | 1 | leicht |
| | B5 | 0,4% RHENOPREN C | 3 | 2 | stark |
| | B6 | 0,4% Faktis RQ 20 | 3 | 1 | stark |
| | B7 | 0,4% Faktis NQ | 0 | 0 | mittel |

**Tabelle 3**

| | nicht erfindungsgemäß | | | | erfindungsgemäß |
|---|---|---|---|---|---|
| | A3 | A4 | A5 | A6 | B8 |
| Additiv [GWT] | ohne | 2S | 2S | 2S | 1,8 S + 0,2 F |
| Binderanteil [GWT: GWT] | 0,8 : 0,8 | 0,8 : 0,8 | 0,7 : 0,7 | 0,65 : 0,65 | 0,8 : 0,8 |
| Mittelwert Sandanhaftung [mg] | 0,28 | 0,19 | 0,17 | 0,13 | 0,07 |

**Tabelle 4**

| | nicht erfindungsgemäß | | | erfindungsgemäß | | |
|---|---|---|---|---|---|---|
| | A7 | A8 | A9 | B9 | B10 | B11 |
| Additiv [GWT] | 1,9S+0,1G | 1,8S+0,2G | 1,7S+0,3G | 1,9S+0,1F | 1,8S+0,2F | 1,7S+0,3F |
| Mittelwert Sandanhaftung [mg] | 0,42 | 0,25 | 0,17 | 0,09 | 0,07 | 0,02 |

| | | | | | | |
|---|---|---|---|---|---|---|
| S = SphereOx G = Graphit F = DEOGRIP WPF | | | | | | |

## Patentansprüche

1. Formstoffmischung, umfassend zumindest
einen feuerfesten Formgrundstoff,
ein Bindemittel und
ein Additiv enthaltend oder bestehend aus Faktis, wobei das Faktis als Pulver oder in Dispersion eingesetzt wird und das Faktis bezogen auf die Formstoffmischung zwischen 0,01 und 8 Gew.% in der Formstoffmischung enthalten ist.

2. Formstoffmischung nach Anspruch 1, wobei das Faktis ein über Schwefel oder Sauerstoff oder ausgehend von Oxiran-/Epoxid-Gruppen vernetzter ungesättigter Ester ist, vorzugsweise ein über O-Brücken vernetzter ungesättigter Ester.

3. Formstoffmischung nach zumindest einem der vorhergehenden Ansprüche, wobei das Faktis eine mittlere Molmasse (Zahlenmittel) zwischen 30000 g/mol und 150000 g/mol, bevorzugt zwischen 30000 und 80000 g/mol, insbesondere zwischen 30000 bis 50000 g/mol, aufweist.

4. Formstoffmischung nach zumindest einem der vorhergehenden Ansprüche, wobei das Faktis als trockenes Pulver eingesetzt wird.

5. Formstoffmischung nach zumindest einem der vorhergehenden Ansprüche, wobei das Faktis eine Teilchengröße mit einem mittleren Durchmesser von 30 bis 600 µm, vorzugsweise von 60 bis 300 µm und besonders bevorzugt von 80 bis 200 µm, aufweist.

6. Formstoffmischung nach zumindest einem der vorhergehenden Ansprüche, wobei das Faktis einen Schwefelgehalt zwischen 0 und 20 Gew.%, bevorzugt zwischen 0 und 10 Gew.%, besonders bevorzugt zwischen 0 und 5 Gew.%, aufweist und ganz besonders bevorzugt keinen Schwefel enthält.

7. Formstoffmischung nach zumindest einem der vorhergehenden Ansprüche, wobei
a) das Faktis, bezogen auf die Formstoffmischung, zwischen 0,05 und 5 Gew.%, bevorzugt zwischen 0,1 und 3 Gew% und besonders bevorzugt größer 0,2 und kleiner 1,5 Gew.%, in der Formstoffmischung enthalten ist und/oder
b) das Faktis, bezogen jeweils auf den feuerfesten Formgrundstoff, zwischen 0,01 und 8 Gew.% in der Formstoffmischung enthalten ist, bevorzugt zwischen 0,05 und 5 Gew.%, besonders bevorzugt zwischen 0,1 und 3 Gew% und ganz besonders bevorzugt größer 0,2 und kleiner 1,5 Gew.%.

8. Formstoffmischung nach zumindest einem der vorhergehenden Ansprüche, wobei die Formstoffmischung ein weiteres Additiv zur Vermeidung der Blattrippenbildung umfasst, ausgewählt aus einem oder mehreren Mitgliedern der Gruppe Mineralien, Mikrohohlkugeln, Holzmehl, organisches Fasermaterial, Kohlenhydrate, Kohlenstoff, natürliche Öle, Mineralöle, Wachse, Naturharze und Kunstharze, Glimmer, Vermiculit, Aluminosilikate wie Spodumen, Aluminiumoxide, Alkali- und Erdalkalifeldspate, Eisen-, Aluminium-, Titan- und Manganoxide, besonders bevorzugt ausgewählt aus Aluminosilikaten wie Spodumen, Aluminiumoxiden, Alkalifeldspaten, Erdalkalifeldspaten, Eisenoxiden, Aluminiumoxiden, Titanoxiden und Manganoxiden und deren Mischungen.

9. Formstoffmischung nach zumindest einem der vorhergehenden Ansprüche, enthaltend weiterhin eines oder mehrere der folgenden weiteren Additive zur Vermeidung der Blattrippenbildung:
- zumindest ein Aluminiumsilikate, insbesondere in Mengen von 1 bis 15 Gew.%; besonders bevorzugt von 1 bis 10 Gew.%;
- ein Eisenoxid, insbesondere in Mengen von 1 bis 15 Gew.%, besonders bevorzugt von 1 bis 8 Gew.%;
- Holzmehle, insbesondere in Mengen von 0,3 bis 5 Gew.%, besonders bevorzugt von 0,3 bis 3 Gew.%; und
- Dextrine und Stärken, insbesondere zwischen 0,5 bis 5 Gew.%, bevorzugt zwischen 0,5 bis 4 Gew.%, besonders bevorzugt von 0,5 bis 3 Gew.%,
jeweils bezogen auf die Formstoffmischung.

10. Formstoffmischung nach Anspruch 8 oder 9, wobei das Gewichtsverhältnis von Faktis zu einem oder mehreren der weiteren Additiven 1:100 bis 100:1, bevorzugt 1:10 bis 1:1, beträgt.

11. Formstoffmischung nach zumindest einem der vorhergehenden Ansprüche, wobei das Bindemittel ausgewählt ist aus einem oder mehreren Mitgliedern:
- zumindest einem Polyol und einem Polyisocyanat, härtbar mit einem tertiären Amin;
- ein alkalisches Phenolresol, enthaltend eine Borverbindung härtbar durch CO₂;
- ein alkalisches Resol, härtbar mit einem Ester oder Methylformiat;
- Resole, Furanharze, Harnstoffharze oder Mischharze, jeweils thermisch härtbar;
- Binder auf Silikatbasis, thermisch oder durch CO₂ härtbar;
- Novolake, härtbar durch Hexamethylentriamin;
- Resole, Furanharze oder Mischharze, härtbar jeweils durch Säure;
- Mischung aus Epoxidharzen und Acrylaten, härtbar mittels SO₂,
wobei das Bindemittel bevorzugt ausgewählt ist aus einem oder mehreren Mitgliedern:
- zumindest einem Polyol und einem Polyisocyanat, härtbar mit einem tertiären Amin;
- ein alkalisches Phenolresol, enthaltend eine Borverbindung härtbar durch CO₂;
- Binder auf Silikatbasis, thermisch oder durch CO₂ härtbar; und
- Mischungen aus Epoxidharzen und Acrylaten, härtbar mittels SO₂;
und insbesondere bevorzugt umfasst das Bindemittel
- zumindest ein Polyol und ein Polyisocyanat, härtbar mit einem tertiären Amin.

12. Formstoffmischung nach zumindest einem der vorhergehenden Ansprüche, wobei das Bindemittel von 0,4 Gew.% bis 7 Gew.%, bevorzugt von 0,5 Gew.% bis 6 Gew.% und besonders bevorzugt von ca. 0,5 Gew.% bis 5 Gew.%, jeweils bezogen auf die Formstoffmischung, in der Formstoffmischung enthalten ist.

13. Formstoffmischung nach zumindest einem der vorhergehenden Ansprüche, wobei der feuerfeste Formgrundstoff aus einem oder mehreren der nachfolgenden Mitglieder Quarz-Sand, Zirkon-Sand oder Chromerz-Sand, Olivin, Vermiculit, Bauxit, Schamotte, Glasperlen, Glasgranulat, Aluminiumsilikatmikrohohlkugeln und deren Mischungen ausgewählt ist, wobei, auch unabhängig hiervon, bezogen auf den feuerfesten Formgrundstoff, dieser zu mehr als 20 Gew.% aus Quarzsand besteht.

14. Formstoffmischung nach zumindest einem der vorhergehenden Ansprüche, wobei größer 70 Gew.%, vorzugsweise größer gleich 80 Gew.%, und besonders bevorzugt größer gleich 85 Gew.%, der Formstoffmischung feuerfester Formgrundstoff ist.

15. Formstoffmischung nach zumindest einem der vorhergehenden Ansprüche, wobei der feuerfeste Formgrundstoff mittlere Partikeldurchmesser von 100 µm bis 600 µm, bevorzugt zwischen 120 µm und 550 µm, aufweist, bestimmt durch Siebanalyse.

16. Formstoffmischung nach zumindest einem der vorhergehenden Ansprüche, wobei das Bindemittel zumindest ein Polyol und ein Polyisocyanat umfasst und das Bindemittel mit einem tertiären Amin härtbar ist.

17. Komponenten-System zur Herstellung von Formstoffmischungen, umfassend getrennt voneinander zumindest folgende Komponenten:
Komponente A) enthaltend oder bestehend aus einen feuerfesten Formgrundstoff,
Komponente B) enthaltend oder bestehend aus Bindemittel mit Härter/Aktivator/Katalysator und
Komponente C) enthaltend oder bestehend aus Faktis, wobei das Faktis als Pulver oder in Dispersion eingesetzt wird und Faktis bezogen auf die Formstoffmischung zwischen 0,01 und 8 Gew.% in der Formstoffmischung enthalten ist.

18. Komponenten-System nach Anspruch 17, wobei die Komponente C) ein weiteres anderes Additiv zur Vermeidung der Blattrippenbildung enthält, vorzugsweise zumindest ein Eisenoxid im Gewichtsverhältnis von dem Faktis zu Eisenoxid von 1:100 bis 100:1, bevorzugt 1:10 bis 1:1.

19. Komponenten-System nach Anspruch 17 oder 18, wobei die die Bestandteile der jeweiligen Komponente weiter wie in einem der Ansprüche 1 bis 16 gekennzeichnet sind.

20. Verfahren zur Herstellung eines Kerns oder einer Form, umfassend die folgenden Schritte:
Einbringen der Formstoffmischung nach zumindest einem der vorhergehenden Ansprüche 1 bis 16, ggf. enthaltend weitere Bestandteile, in ein Formwerkzeug;
Härten der Formstoffmischung im Formwerkzeug; und
Entnahme des gehärteten Kerns oder der Form aus dem Formwerkzeug.

21. Form oder Kern, herstellbar nach dem Verfahren nach Anspruch 20 für den Metallguss, insbesondere den Eisen- und/oder Stahlguss.

22. Verwendung von Faktis als Additiv zur Blattrippenvermeidung und/oder als Trennmittel in Formen und/oder Kernen für den Metallguss, insbesondere für den Eisen- und Stahlguss, wobei das Faktis als Pulver oder in Dispersion eingesetzt wird, wobei die Formen und/oder Kernen aus einer Formstoffmischung erhalten werden und Faktis, bezogen auf die Formstoffmischung, zwischen 0,01 bis 8 Gew.% in der Formstoffmischung enthalten ist.

## Claims

1. A mold material mixture comprising at least
a refractory mold base material,
a binder and
an additive comprising or consisting of factice, the factice being used as a powder or in dispersion and the factice being present in the mold material mixture in a proportion of between 0.01 and 8 wt.%, based on the mold material mixture.

2. The mold material mixture according to claim 1, wherein the factice is an unsaturated ester crosslinked via sulfur or oxygen or starting from oxirane/epoxide groups, preferably an unsaturated ester crosslinked via O-bridges.

3. The mold material mixture according to at least one of the preceding claims, wherein the factice has an average molar mass (number average) of between 30000 g/mol and 150000 g/mol, preferably between 30000 and 80000 g/mol, especially between 30000 to 50000 g/mol.

4. The mold material mixture according to at least one of the preceding claims, wherein the factice is used as a dry powder.

5. The mold material mixture according to at least one of the preceding claims, wherein the factice has a particle size with an average diameter of from 30 to 600 µm, preferably from 60 to 300 µm and especially preferably from 80 to 200 µm.

6. The mold material mixture according to at least one of the preceding claims, wherein the factice has a sulfur content of between 0 and 20 wt.%, preferably between 0 and 10 wt.%, especially preferably between 0 and 5 wt.%, and most preferably contains no sulfur.

7. The mold material mixture according to at least one of the preceding claims, wherein
a) the factice, based on the mold material mixture, is comprised between 0.05 and 5 wt.%, preferably between 0.1 and 3 wt.% and especially preferably more than 0.2 and less than 1.5 wt.%, in the mold material mixture , and/or
b) the factice is present in the mold material mixture in a proportion of between 0.01 and 8 wt.%, preferably between 0.05 and 5 wt.%, especially preferably between 0.1 and 3 wt.% and especially preferably more than 0.2 and less than 1.5 wt.%, based on the respective refractory mold base material.

8. The mold material mixture according to at least one of the preceding claims, wherein the mold material mixture comprises another additive for preventing veining, selected among one or more members of the group consisting of minerals, hollow microspheres, wood flour, organic fiber material, carbohydrates, carbon, natural oils, mineral oils, waxes, natural resins and synthetic resins, mica, vermiculite, aluminosilicates such as spodumene, aluminum oxides, alkali and alkaline earth feldspars, iron oxides, aluminum oxides, titanium oxides and manganese oxides, especially preferably is selected among aluminosilicates such as spodumene, aluminum oxides, alkali feldspars, alkaline earth feldspars, iron oxides, aluminum oxides, titanium oxides and manganese oxides and mixtures thereof.

9. The mold material mixture according to at least one of the preceding claims, further comprising one or more of the following other additives for preventing veining:
- at least one aluminosilicate, especially in amounts of from 1 to 15 wt.%; especially preferably from 1 to 10 wt.%;
- an iron oxide, especially in amounts of from 1 to 15 wt.%; especially preferably from 1 to 8 wt.%;
- wood flours, especially in amounts of from 0.3 to 5 wt.%, especially preferably from 0.3 to 3 wt.%; and
- dextrins and starches, especially of between 0.5 to 5 wt.%, preferably of between 0.5 to 4 wt.%, especially preferably of from 0.5 to 3 wt.%, each based on the mold material mixture.

10. The mold material mixture according to claim 8 or 9, wherein the weight ratio of factice to one or more of the other additives is from 1:100 to 100:1, preferably from 1:10 to 1:1.

11. The mold material mixture according to at least one of the preceding claims, wherein the binder is selected among one or more members from the group consisting of:
- at least one polyol and a polyisocyanat curable with a tertiary amine;
- an alkaline phenolic resole containing a boron compound curable with CO₂;
- an alkaline resol curable with an ester or methyl formate;
- resols, furan resins, urea resins or mixed resins, in each case thermally curable;
- silicate-based binders, thermally or CO₂-curable;
- Novolak, curable with hexamethylene triamine;
- resols, furan resins or mixed resins, each curable with acid;
- a mixture of epoxy resins and acrylates, curable with SO₂,
the binder preferably being selected among one or more members of the group consisting of:
- at least one polyol and one polyisocyanate curable with a tertiary amine;
- an alkaline phenolic resol containing a boron compound curable with CO₂;
- silicate-based binders thermally curable or curable with SO₂; and
- mixtures of epoxy resins and acrylates curable with SO₂;
and especially preferably the binder comprises
- at least one polyol and one polyisocyanate curable with a tertiary amine.

12. The mold material mixture according to at least one of the preceding claims, wherein the binder is present in the mold material mixture from 0.4 wt.% to 7 wt.%, preferably from 0.5 wt.% to 6 wt.%, and especially preferably from about 0.5 wt.% to 5 wt.%, in each case based on the mold material mixture.

13. The mold material mixture according to at least one of the preceding claims, wherein the refractory mold base material is selected among one or more of the following members of the group consisting of quartz sand, zircon sand or chrome ore sand, olivine, vermiculite, bauxite, fireclay, glass beads, glass granules, aluminum silicate hollow spheres and mixtures thereof, wherein, also independently thereof, based on the refractory mold base material, more than 20 wt.% thereof consisting of quartz sand.

14. The mold material mixture according to at least one of the preceding claims, wherein greater than 70 wt.% of the mold material mixture is a refractory mold base material, preferably greater than or equal to 80 wt.%, and especially preferably greater than or equal to 85 wt.%.

15. The mold material mixture according to at least one of the preceding claims, wherein the refractory mold base material comprises mean particle diameters of from 100 µm to 600 µm, preferably between 120 µm and 550 µm, as determined by sieve analysis.

16. The mold material mixture according to at least one of the preceding claims, wherein the binder comprises at least a polyol and a polyisocyanate, and the binder is curable with a tertiary amine.

17. A component system for the preparation of mold material mixtures, comprising, separately from each other, at least the following components:
component A) comprising or consisting of a refractory mold base,
component B) comprising or consisting of binder including curing agent/activator/ catalyst, and
component C) comprising or consisting of factice, the factice being used as a powder or in dispersion, and factice being present in the mold material mixture in a proportion of between 0.01 and 8 wt.%, based on the mold material mixture.

18. The component system according to claim 17, wherein component C) contains an additional other additive for preventing formation of veining, preferably at least an iron oxide in a weight ratio of the factice to iron oxide of 1:100 to 100:1, preferably 1:10 to 1:1.

19. The component system according to claim 17 or 18, wherein the constituents of the respective component are further characterized as in any one of the claims 1 to 16.

20. A process for producing a core or mold, comprising the following steps:
introducing, into a molding tool, the mold material mixture according to at least one of the preceding claims 1 to 16, optionally containing additional components;
curing the mold material mixture in the molding tool; and
removing the cured core or mold from the molding tool.

21. A mold or core producible by the process according to claim 20 for metal casting, especially iron and/or steel casting.

22. The use of factice as an additive for preventing veining and/or as a release agent in molds and/or cores for metal casting, especially for iron and steel casting, wherein the factice is used as a powder or in dispersion, wherein the molds and/or cores are obtained of a mold material mixture, and factice, based on the mold material mixture, is present in the mold material mixture in a proportion of between 0.01 to 8 wt.%.

## Revendications

1. Mélange de matières de moulage, comprenant au moins :
une matière de base de moulage réfractaire,
un liant, et
un additif contenant ou se composant de factice, ledit factice étant mis en œuvre en tant que poudre ou en dispersion et le factice étant présent dans le mélange de matières de moulage entre 0,01 et 8 % en poids par rapport au mélange de matières de moulage.

2. Mélange de matières de moulage selon la revendication 1, dans lequel le factice est un ester insaturé réticulé par le biais du soufre ou de l'oxygène ou en partant des groupes oxirane/époxyde, de préférence un ester insaturé réticulé par le biais de ponts O.

3. Mélange de matières de moulage selon au moins l'une des revendications précédentes, dans lequel le factice présente une masse molaire moyenne (moyenne en nombres) comprise entre 30 000 g/mol et 150 000 g/mol, de préférence entre 30 000 et 80 000 g/mol, en particulier entre 30 000 à 50 000 g/mol.

4. Mélange de matières de moulage selon au moins l'une des revendications précédentes, dans lequel le factice est mis en œuvre en tant que poudre sèche.

5. Mélange de matières de moulage selon au moins l'une des revendications précédentes, dans lequel le factice présente une taille de particules ayant un diamètre moyen de 30 à 600 µm, de préférence de 60 à 300 µm et de manière particulièrement préférée de 80 à 200 µm.

6. Mélange de matières de moulage selon au moins l'une des revendications précédentes, dans lequel le factice contient une teneur en soufre comprise entre 0 et 20 % en poids, de préférence entre 0 et 10 % en poids, de manière particulièrement préférée entre 0 et 5 % en poids, et de manière toute particulièrement préférée aucun soufre.

7. Mélange de matières de moulage selon au moins l'une des revendications précédentes, dans lequel
a) le factice est présent dans le mélange de matières de moulage entre 0,05 et 5 % en poids, de préférence entre 0,1 et 3 % en poids et de manière particulièrement préférée à plus de 0,2 et à moins de 1,5 % en poids, par rapport au mélange de matières de moulage, et/ou
b) le factice est présent dans le mélange de matières de moulage entre 0,01 et 8 % en poids, de préférence entre 0,05 et 5 % en poids, de manière particulièrement préférée entre 0,1 et 3 % en poids et de manière tout particulièrement préférée à plus de 0,2 et à moins de 1,5 % en poids, par rapport à la matière de base de moulage réfractaire.

8. Mélange de matières de moulage selon au moins l'une des revendications précédentes, dans lequel le mélange de matières de moulage comprend un autre additif pour éviter la formation de nervures, choisi à partir d'un ou de plusieurs éléments du groupe consistant en minéraux, microsphères creuses, sciure de bois, matériau fibreux organique, hydrates de carbone, carbone, huiles naturelles, huiles minérales, cires, résines naturelles et résines artificielles, mica, vermiculite, aluminosilicates tels que le spodumène, oxydes d'aluminium, feldspaths d'alcalins et d'alcalino-terreux, oxydes de fer, d'aluminium, de titane, et de manganèse, de manière particulièrement préférée choisi parmi les aluminosilicates tels que le spodumène, les oxydes d'aluminium, les feldspaths d'alcalins, les feldspaths d'alcalino-terreux, les oxydes de fer, les oxydes d'aluminium, les oxydes de titane et les oxydes de manganèse, et leurs mélanges.

9. Mélange de matières de moulage selon au moins l'une des revendications précédentes, contenant en outre un ou plusieurs des autres additifs suivants pour éviter la formation de nervures :
- au moins un silicate d'aluminium, en particulier en des quantités de 1 à 15 % en poids ; de manière particulièrement préférée de 1 à 10 % en poids ;
- un oxyde de fer, en particulier en des quantités de 1 à 15 % en poids, de manière particulièrement préférée de 1 à 8 % en poids ;
- de la sciure de bois, en particulier en des quantités de 0,3 à 5 % en poids, de manière particulièrement préférée de 0,3 à 3 % en poids ; et
- des dextrines et des amidons, en particulier de 0,5 à 5 % en poids, de manière particulièrement préférée de 0,5 à 4 % en poids, de manière particulièrement préférée de 0,5 à 3 % en poids,
respectivement par rapport au mélange de matières de moulage.

10. Mélange de matières de moulage selon la revendication 8 ou 9, dans lequel le rapport en poids du factice sur l'un ou plusieurs des autres additifs est de 1 : 100 à 100 : 1, de préférence de 1 : 10 à 1 : 1.

11. Mélange de matières de moulage selon au moins l'une des revendications précédentes, dans lequel le liant est choisi parmi un ou plusieurs des éléments :
- au moins un polyol et un polyisocyanate, durcissables avec une amine tertiaire ;
- le résol phénolique alcalin, contenant un composé de bore durcissable au CO₂ ;
- un résol alcalin, durcissable avec un ester ou un formiate de méthyle ;
- des résols, des résines de furane, des résines d'urée ou des résines mixtes, durcissables respectivement thermiquement ;
- des liants à base de silicate, durcissables thermiquement ou au CO₂ ;
- des novolaques, durcissables à l'hexaméthylène triamine ;
- des résols, des résines de furane ou des résines mixtes, durcissables respectivement à l'acide ;
- un mélange de résines d'époxyde et d'acrylates, durcissables au SO₂,
dans lequel le liant est choisi de préférence parmi un ou plusieurs des éléments :
- au moins un polyol et un polyisocyanate, durcissables avec une amine tertiaire ;
- un résol phénolique alcalin, contenant un composé de bore, durcissable au CO₂ ;
- des liants à base de silicate, durcissables thermiquement ou au CO₂ ; et
- des mélanges constitués de résines d'époxyde et d'acrylates, durcissables au SO₂;
et de manière particulièrement préférée, le liant comprend
- au moins un polyol et un polyisocyanate, durcissables avec une amine tertiaire.

12. Mélange de matières de moulage selon au moins l'une des revendications précédentes, dans lequel le liant est présent dans le mélange de matières de moulage de 0,4 % en poids à 7 % en poids, de préférence de 0,5 % en poids à 6 % en poids, et de manière particulièrement préférée d'environ 0,5 % en poids à 5 % en poids, respectivement par rapport au mélange de matières de moulage.

13. Mélange de matières de moulage selon au moins l'une des revendications précédentes, dans lequel la matière de base de moulage réfractaire est choisie parmi un ou plusieurs des éléments suivants : sable de quartz, sable de zircone ou sable de minerai de chrome, olivine, vermiculite, bauxite, chamotte, perles de verre, granulé de verre, microsphères creuses de silicate d'aluminium et leurs mélanges, celle-ci se composant, également indépendamment de cela, à plus de 20 % en poids de sable de quartz, par rapport à la matière de base de moulage réfractaire.

14. Mélange de matières de moulage selon au moins l'une des revendications précédentes, dans lequel plus de 70 % en poids, de préférence un taux supérieur ou égal à 80 % en poids, et de manière particulièrement préférée, un taux supérieur ou égal à 85 % en poids du mélange de matières de moulage est de la matière de base de moulage réfractaire.

15. Mélange de matières de moulage selon au moins l'une des revendications précédentes, dans lequel la matière de base de moulage réfractaire présente des diamètres moyens de particules de 100 µm à 600 µm, de préférence compris entre 120 µm et 550 µm, déterminés par analyse au tamis.

16. Mélange de matières de moulage selon au moins l'une des revendications précédentes, dans lequel le liant comprend au moins un polyol et un polyisocyanate et le liant est durcissable avec une amine tertiaire.

17. Système multicomposant pour la fabrication de mélanges de matières de moulage, comprenant, séparément les uns des autres, au moins les composants suivants :
composant A) contenant ou se composant d'une matière de base de moulage réfractaire,
composant B) contenant ou se composant de liant avec un durcisseur/activateur/catalyseur et
composant C) contenant ou se composant de factice, le factice étant mis en œuvre sous forme de poudre ou en dispersion et le factice étant présent dans le mélange de matières de moulage entre 0,01 et 8 % en poids, par rapport au mélange de matières de moulage.

18. Système multicomposant selon la revendication 17, dans lequel le composant C) contient un autre additif supplémentaire pour éviter la formation de nervures, de préférence au moins un oxyde de fer en un rapport en poids du factice sur l'oxyde de fer de 1 : 100 à 100 : 1, de préférence de 1 : 10 à 1 : 1.

19. Système multicomposant selon la revendication 17 ou 18, dans lequel les ingrédients des composants respectifs sont en outre caractérisés comme dans l'une des revendications 1 à 16.

20. Procédé de fabrication d'un noyau ou d'un moule, comprenant les étapes suivantes consistant à :
introduire le mélange de matières de moulage selon au moins l'une des revendications précédentes 1 à 16, le cas échéant contenant d'autres ingrédients, dans un outil de formage ;
durcir le mélange de matières de moulage dans l'outil de formage ; et
retirer le noyau ou le moule hors de l'outil de formage.

21. Moule ou noyau, pouvant être fabriqué d'après le procédé selon la revendication 20 pour la coulée du métal, en particulier la coulée du fer et/ou de l'acier.

22. Utilisation de factice comme additif pour éviter les nervures et/ou comme agent de démoulage dans des moules et/ou des noyaux pour la coulée de métal, en particulier pour la coulée de fer et d'acier, le factice étant mis en œuvre sous forme de poudre ou en dispersion, les moules et/ou les noyaux étant obtenus à partir d'un mélange de matières de moulage et le factice étant présent dans le mélange de matières de moulage de 0,01 à 8 % en poids, par rapport au mélange de matières de moulage.
